# EUROPEAN PATENT SPECIFICATION

(11) **EP 2 572 861 B1**
(45) Date of publication and mention of the grant of the patent: **04.06.2014**
(21) Application number: 11306184.0
(22) Date of filing: 20.09.2011
(51) Int. Cl.: B29C 59/14, C08J 7/12

(54) **Process of atmospheric plasma multistep grafting of polymer films**
Verfahren zum Atmosphärenplasma-Pfropfen von Polymerfolien in mehreren Schritten
Procédé à plusieurs étapes de greffe plasma atmosphérique de films polymères

(43) Date of publication of application: 27.03.2013
(73) Proprietor: L'Air Liquide Société Anonyme pour l'Etude et l'Exploitation des Procédés Georges Claude, 75007 Paris (FR)
(72) Inventor: Cocolios, Panayotis, 78830 Bullion (FR); Gat, Eric, 13114 Puyloubier (FR)
(74) Representative: Mellul-Bendelac, Sylvie Lisette

(56) References cited:
- US-A- 5 527 566
- US-A1- 2007 246 472
- US-A1- 2010 035 496

## Description

The present invention relates to the field of surface treatments of polymer substrates, which are widely used in many industries, especially those of food packaging or pharmaceutical packaging, graphic arts, manufacture of adhesive labels or tapes, furniture protection, floor mats, or thermal insulation, or else for manufacturing insulating electrical components.

It is well known that adhesion improvement of liquid coatings like inks, varnishes, adhesives or else functional coatings, to plastic substrates such as films and sheets, is very challenging and most often requires the use of liquid primers. The same concerns multilayer structures made from combinations of plastic films or sheets and other plastics, metal foil, paper, paper board and wooden materials. They are very common in every-day life and are found incorporated in goods used in many sectors like food and non food packaging, furniture, building, transportation (cars, aircrafts), energy production (solar panels), printed electronics, optical films, OLED where adhesion performance is mandatory.

Liquid primers are most often formulated in organic solvents (VOC) or water, and require the use of a coating unit, of a dryer, of a VOC recovery unit and waste treatment to handle solvent or water and therefore undergo severe investment and running costs drawbacks while they remain environmentally unfriendly.

It is also well known that oxygen-free nitrogen gas can be ionized when exposed to a Dielectric Barrier Discharge ("DBD"), creating nitrogen based atmospheric plasma made of non-excited, vibrating and electronically excited N₂ molecules and of dissociated charged or uncharged nitrogen atoms and their combinations.

When a plastic film is exposed to such a plasma for even very short durations (for example a few milliseconds) free electrons, electronically excited N₂ molecules and charged reactive species collide with the surface of the film, breaking C-H, C-C, C-O, C-N etc... covalent bonds and creating radicals on the surface of the film. These radicals react with gaseous radical species resulting from either homolytic scission of neutral molecules or recombination of activated species in the gas phase located between the electrodes creating the discharge. As a result, it is well established that the surface of the film is grafted with nitrogenbased chemical functions like amines, amides and imides. X-Ray Photoelectron Spectroscopy reveals that typical atomic concentrations of grafted nitrogen are in the range of 3-8%. The absolute concentration and the ratio of amino Vs amido/imido groups depends on several parameters including specific energy of plasma (or corona dosage expressed in Wmin/m²) and on the presence of various dopant gases added to nitrogen which is considered as the carrier gas. The concentration of amines resulting from such treatments is rather low, whereas in the presence of oxidizing gases only amido and imido groups are observed. However, amino groups are by far the more interesting to graft, because they can undergo both covalent and hydrogen bonding, particularly when reacted with acrylates, which are the most important class of resins for modern, environmentally friendly radiation curable inks, varnishes, functional coatings and structural adhesives.

More recent works (see for example the document EP - 2 111 332 in the name of the Applicant) have reported that the addition into the discharge of small amounts of unsaturated hydrocarbons like acetylene or ethylene, lowers the corona dosage necessary to activate and graft nitrogen atoms onto the surface of polymer films and favours the formation of amino groups. For example, for low concentrations of acetylene (100-200 pm), surface concentration of atomic nitrogen ranges between 6-8%. For higher concentrations (like 300-500 ppm) and relatively high corona dosages, the concentration of atomic nitrogen can reach up to 14%. However in this case one can observe two drawbacks:
1. The creation of nitrile groups, C=N which are not active for the creation of adhesive bonds.
2. The production of polyacetylene powder in the discharge, which deposits on the electrodes as a brown sticky powder and which needs frequently stopping the treatment for cleaning.

As it will be seen in more details in what follows, the present inventors have highlighted that a new and very interesting solution to overcome these limitations in the case of polyolefin substrates was able to be provided by using the following succession of at least two steps :
1. The polymer substrate (polyolefin) is treated at high corona dosage with a low concentration of an unsaturated hydrocarbon like acetylene : for example a plain BOPP film is treated in a N₂/C₂H₂ mixture containing 200 ppm of acetylene at 70 Wmin/m².
2. The substrate obtained after step 1 is treated again in a reducing atmosphere at medium to high corona dosage: for example, the treatment is performed in a N₂/H₂ mixture at 500 ppm of hydrogen, at either 40 or 70 Wmin/m².

Let's explain how the notions evoked above should be understood:
- the notion of «high corona dosage» at step 1 : we know that generally speaking the power of the discharge drives the reactions undergone by the species present in the inter-electrode space and notably the combinations grafted on the surface.

We recommend here a range going from 70 to 150 Wmin/m², and more preferentially from 70 to 100 Wmin/m².
- the notion of «medium to high corona dosage» at step 2 : we recommend here a range going from 40 to 80 Wmin/m² and preferentially from 50 to 70 Wmin/m².
- the notion of « low concentration of hydrocarbon» at step 1 : it should be understood as a range going from 10 to 500 ppm, and preferentially from 25 to 250 ppm.
- the step 1 implements an unsaturated hydrocarbon, i.e a gas chosen from the group comprising at least one linear or branched, monounsaturated or polyunsaturated hydrocarbon preferably having 2 to 10 carbon atoms, more preferably 2 to 5 carbon atoms, more preferably still 2 or 3 carbon atoms, optionally substituted by at least one functional group of the amine, amide, acid, ester, alcohol, imine, imide, or halide type, or by at least one coupling agent especially by silanol groups, and combinations thereof.
- the step 2 implements a reducing atmosphere, which is to be understood according to the invention as gas mixture comprising one or more reducing agents such as H2, or saturated hydrocarbon like CH4 or a silane like SiH4, even water vapor transported by a carrier gas could be envisaged for certain applications.

More preferentially, step 2 implements mixtures of N2-H2 (10 to 3000 ppm of H2), and still more preferentially a concentration of H2 in the 100 to 750 ppm range.

The experiments made by the Applicant have notably demonstrated that this two steps procedure is much more efficient (for example in terms of water contact angle measurements) as compared to the implementation of each of those steps alone or of those two atmospheres in a mixture during one single step.

Thus, the present invention relates to a method for the surface treatment of polyolefin substrates, during which the substrate is subjected to at least the following two process steps :
- a dielectric barrier electrical discharge, in a first treatment gas mixture containing at least one active gas being chosen in the group comprising at least one linear or branched, monounsaturated or polyunsaturated hydrocarbon preferably having 2 to 10 carbon atoms, more preferably 2 to 5 carbon atoms, more preferably still 2 or 3 carbon atoms, the concentration of the active gas in the first mixture being within a range going from 10 to 500 ppm vol;
- a dielectric barrier electrical discharge, in a second treatment gas mixture being a reducing gas mixture.

Both process steps are preferentially carried out at a pressure substantially equal to atmospheric pressure, the notion of pressure substantially equal to atmospheric pressure should be understood as lying in the range of 100 000 to 100 500 Pa et more preferably in the range of 100 005 and 100 050 Pa.

The method according to the invention may furthermore include one or more of the optional features below :
- said hydrocarbon is substituted by at least one functional group of amine, amide, acid, ester, alcohol, imine, imide or halide type, or by at least one coupling agent especially by silanol groups, or a combination thereof.
- the active gas is a gas or a liquid in vapor state for which the vapor pressure at a temperature of 20°C is greater than 10 Pascal.
- the active gas is chosen from unsaturated hydrocarbons having 2 or 3 carbon atoms.
- the active gas is acetylene or ethylene or propylene, or a mixture of these gases.
- the second treatment mixture is a mixture comprising hydrogen, whose content of hydrogen is in the 10 to 3000 ppm vol range, and more preferentially in the 100 to 750 ppm vol range.
- the concentration of the active gas in the first mixture is within a range going from 25 to 250 ppm vol.

The numerous advantages provided by the present invention will be better understood in light of Tables and examples that illustrate the description given below.

Table 1 summarizes a series of experiments performed under different operation conditions (or recipes). They have been made at high plasma dosage (70 Wmin/m²) using hydrogen, acetylene and their mixtures as dopant gases.

If recipes 4 and 5 are two steps treatments according to the invention, recipes 1-2-3 are comparative :
- recipe 1 : a one step treatment in a N2-H2 mixture;
- recipe 2 : a one step treatment in a N2-C2H2 mixture;
- recipe 3 : a one step treatment in a N2-H2-C2H2 mixture.
- recipes 4 and 5 - two steps :
   -- > the first step of recipe 4 is carried out at 70 Wmin/m² whereas the second step of recipe 4 is carried out à 40 Wmin/m²
   -- > the first step of recipe 5 is carried out at 70 Wmin/m² whereas the second step of recipe 5 is carried out also at 70 Wmin/m²

The wetting performance: of each treatment is evaluated by measuring the surface energy Es and the water contact angle (WCA) of the surface of the substrate after treatment. The ageing behaviour (i.e. evolution during storage) of the treated samples has also been recorded (values recorded just after treatment and 7 and 30 days later... three last columns at the right of the Table 1).

One should keep in mind that we in fact look for good adhesion performances: the WCA gives a wetting information, it is related to an increase of the polar groups at the surface of the substrate and so to the nitrogen grafting rate and to the nature of the amine or amide groups created.

Then a good wettability is not automatically associated with a strong adhesion as will be demonstrated later on in further Tables.

From the obtained data we can conclude that:
1. The two-step sequence at high corona dosage according to the invention (recipe 5) is much more efficient in terms of wetting with polar liquids than the use of each reactant alone (recipes 1 and 2) or as a mixture in a single discharge (recipe 3).
2. It seems in the present case more beneficial to use also a high corona dosage for the second step (compare recipe 5 Vs recipe 4).
3. Surface energy measurements with calibrating inks are not discriminative enough to be used as criteria of successful treatment.
4. In an in line process, the two-step sequences according to the invention perform better than standard treatment (recipes 1 & 2).

| Table 1: Performance of various treatments | | | | | | | | | |
|---|---|---|---|---|---|---|---|---|---|
| Recipe | **Discharge conditions** | | | **Surface Energy (mN/m)** | | | **Water contact angle (degree)** | | |
| | **Dosage (W.min/m²)** | **C₂H₂ (ppm)** | **H₂ (ppm)** | **σ₀** | **σ₇** | **σ₃₀** | **θ₀** | **θ₇** | **θ₃₀** |
| **1** | 70 | 0 | 500 | 60 | | | 71.8±0.4 | | |
| **2** | 70 | 200 | 0 | 60 | | | 52.0±0.5 | | |
| **3 (one step)** | 70 | 200 | 500 | 60 | 60 | 60 | 45.8±0.8 | 68.8±0.4 | 70.3 ±0.4 |
| **4 (two steps)** | 70/40 | 200 | 500 | 60 | 60 | 60 | 49.1 ±0.7 | 67.9 ±0.9 | 72.2 ±0.7 |
| **5 (two steps)** | 70/70 | 200 | 500 | 60 | 60 | 60 | 43.7 ±0.7 | 67.3 ±0.5 | 71.7 ±0.5 |

XPS analyses at each step are reported on Table 2 and 3 below. They reveal that in the presence of 500 ppm of hydrogen as dopant but in absence of unsaturated hydrocarbon (recipe 1), grafting of nitrogen is limited to 8.32%. An alternative treatment with 200 ppm of acetylene (in the absence of hydrogen) leads to 13.86 % of grafted nitrogen which contains 4.63 % of the relatively chemically non reactive CΞN group and 4.91% of amido functions.

A mixture of 200 ppm of acetylene and 500 ppm of hydrogen undergoes grafting of 14.17% of nitrogen, 3.83% of which are in the form of nitrile, 4.25% in the form of amine and 5.32% in the form of amide. The comparison of these two experiments indicates that in the presence of hydrogen CΞN is converted to amino and amido groups. The two subsequent treatments are made in two separate steps i.e. treatment by 200 ppm of acetylene followed by a second treatment by 500 ppm of hydrogen. They clearly show an increase of the total %N to 15.31 and 16.24, while reducing the nitrile from 4.63% down to 2.84 and 2.66% and increasing the concentration of amino groups from 3.36 % up to 4.25 and 5.85% respectively.

| **Table2: XPS Analyses - Chemical surface composition (atomic% and ratio)** | | | | | | | |
|---|---|---|---|---|---|---|---|
| **APP Recipe** | θ | %C | %O | %N | O/C | N/C | N/O |
| **1** | 75 | 85.84 | 5.84 | 8.32 | 0.068 | 0.097 | 1.425 |
| **2** | 75 | 82.82 | 3.32 | 13.86 | 0.040 | 0.167 | 4.175 |
| **3 (one step)** | 75 | 82.71 | 3.12 | 14.17 | 0.038 | 0.171 | 4.540 |
| **4 (two steps)** | 75 | 80.51 | 4.17 | 15.31 | 0.052 | 0.190 | 3.670 |
| **5 (two steps)** | 75 | 78.32 | 5.54 | 16.14 | 0.071 | 0.206 | 2.915 |

| **Table 3: XPS Analyses - Chemical forms (atomic %)** | | | | | | | | | | |
|---|---|---|---|---|---|---|---|---|---|---|
| **APP Recipe** | **θ** | **Carbon** | | | | | **Nitrogen** | | | |
| | | **C-C C=C** | **C-O-C C-N** | **C≡N** | **C=O N-C=O** | **O-C=O N(CO)2** | **N-C** | **N≡C** | **N-C=O** | **N(CO)2** |
| **1** | 75 | 71.67 | 9.95 | - | 3.42 | 0.81 | 2.91 | 2.42 | 2.99 | 0.00 |
| **2** | 75 | 57.23 | 10.82 | 9.42 | 4.21 | 1.14 | 3.36 | 4.63 | 4.91 | 0.95 |
| **3 (one step)** | 75 | 58.13 | 10.91 | 9.43 | 3.13 | 1.11 | 4.25 | 3.83 | 5.32 | 0.76 |
| **4 (two steps)** | 75 | 55.44 | 11.87 | 8.08 | 3.81 | 1.32 | 4.33 | 2.84 | 6.58 | 1.56 |
| **5 (two steps)** | 75 | 53.38 | 10.29 | 8.05 | 4.78 | 1.82 | 5.85 | 2.66 | 6.69 | 0.95 |

In Table 2 and 3, the angle Théta (θ) represents the angle of detection of the atoms in the sample.

Then, the value of 75° means that the beam is oriented at 75° from the vertical. This allows decreasing the penetration of the beam inside the sample : as an illustration of the above, for θ=0° we analyze a thickness of 8 nm, whereas for θ=75° we analyze only 2 nm.

In order to evaluate the performance of the adhesive bond between the treated surface and a coating, a series of printing tests were performed with UV curable inks, solvent based inks and water born inks. After coating and adequate curing (using either UV irradiation or thermal solvent or water evaporation) it was proceeded to a 90° peeling test using two different tapes, namely "3M810" bearing an acrylic adhesive and "3M600" bearing a rubber type of adhesive. The obtained results are given in Table 4 below:

| **Table 4: Adhesion results with printing inks** | | | | | | | | | |
|---|---|---|---|---|---|---|---|---|---|
| **Recipe** | **Es (mN/m)** | **Cyan UV ink** | | **Solvent based ink** | | **Water born ink** | | **PU coating** | |
| | | **3M810** | **3M600** | **3M810** | **3M600** | **3M810** | **3M600** | **3M810** | **3M600** |
| **None** | < 32 | 0/5 | 0/5 | 0/5 | 0/5 | 0/5 | 0/5 | 0/5 | 0/5 |
| **1** | 60 | 5/5 | 5/5 | 5/5 | 5/5 | 4/5 | 2/5 | 3/5 | 3/5 |
| **2** | 60 | 5/5 | 5/5 | 5/5 | 5/5 | 5/5 | 3/5 | 4/5 | 4/5 |
| **3 (one step)** | 60 | 5/5 | 5/5 | 5/5 | 5/5 | 5/5 | 4/5 | 4/5 | 5/5 |
| **5 (two steps)** | 60 | 5/5 | 5/5 | 5/5 | 5/5 | 5/5 | 4/5 | 5/5 | 5/5 |

(the recipe « 4 » in Tables 1, 2, 3 has not been evaluated here)

The results expressed in « x/y » represent the qualitative result of the adhesion test i.e whether all or part of the ink is transferred to the tape or remains on the substrate (5/5 : no transfer, 0/5 100% has been transferred to the tape).

The PU coating columns at the right side of the Table illustrate the results obtained for two component Poly Urethane coating containing free isocyanate -N=CΞO groups.

## Claims

1. A method for the surface treatment of polyolefin substrates, during which the substrate is subjected to at least the following two process steps :
- a dielectric barrier electrical discharge, in a first treatment gas mixture containing at least one active gas being chosen in the group comprising at least one linear or branched, monounsaturated or polyunsaturated hydrocarbon preferably having 2 to 10 carbon atoms, more preferably 2 to 5 carbon atoms, more preferably still 2 or 3 carbon atoms, the concentration of the active gas in the first mixture being within a range going from 10 to 500 ppm vol;
- a dielectric barrier electrical discharge, in a second treatment gas mixture being a reducing gas mixture.

2. The surface treatment method as claimed in claim 1, **characterized in that** both process steps are carried out at a pressure substantially equal to atmospheric pressure.

3. The surface treatment method as claimed in claim 1 or 2, **characterized in that** said first treatment gas mixture comprises nitrogen.

4. The surface treatment method as claimed in any one of the preceding claims, **characterized in that** said hydrocarbon is substituted by at least one functional group of amine, amide, acid, ester, alcohol, imine, imide or halide type, or by at least one coupling agent especially by silanol groups, or a combination thereof.

5. The surface treatment method as claimed in any one of the preceding claims, **characterized in that** the active gas is a gas or a liquid in vapor state for which the vapor pressure at a temperature of 20°C is greater than 10 Pascal.

6. The surface treatment method as claimed in any one of the preceding claims, **characterized in that** the active gas is chosen from unsaturated hydrocarbons having 2 or 3 carbon atoms.

7. The surface treatment method as claimed in any one of the preceding claims, **characterized in that** the active gas is acetylene or ethylene or propylene, or a mixture of these gases.

8. The surface treatment method as claimed in any one of the preceding claims, **characterized in that** the second treatment mixture is a mixture comprising hydrogen, whose content of hydrogen is in the 10 to 3000 ppm vol. range, and more preferentially in the 100 to 750 ppm vol. range.

9. The surface treatment method as claimed in any one of the preceding claims, **characterized in that** the concentration of the active gas in the first mixture is within a range going from 25 to 250 ppm vol.

10. The surface treatment method as claimed in any one of the preceding claims, **characterized in that** said first step is carried out at high corona dosage, i.e lying in the 70 to 150 Wmin/m² range and more preferentially in the 70 to 100 Wmin/m² range.

11. The surface treatment method as claimed in any one of the preceding claims, **characterized in that** said second step is carried out at medium to high corona dosage, i.e lying in the 40 to 80 Wmin/m² range and preferentially in the 50 to 70 Wmin/m² range.

## Patentansprüche

1. Verfahren zur Oberflächenbehandlung von Polyolefinsubstraten, in dem das Substrat mindestens den zwei folgenden Verfahrensschritten unterzogen wird:
- einer dielektrischen Barriereentladung in einem ersten Behandlungsgasgemisch, das mindestens ein aktives Gas enthält, das aus der Gruppe ausgewählt wird, die mindestens einen linearen oder verzweigten, einfach oder mehrfach ungesättigten Kohlenwasserstoff mit vorzugsweise 2 bis 10 Kohlenstoffatomen umfasst, bevorzugter mit 2 bis 5 Kohlenstoffatomen, noch bevorzugter mit 2 oder 3 Kohlenstoffatomen, wobei die Konzentration des aktiven Gases im ersten Gemisch im Bereich von 10 bis 500 ppm vol liegt,
- einer dielektrischen Barriereentladung in einem zweiten Behandlungsgasgemisch, das ein Reduktionsgasgemisch ist.

2. Oberflächenbehandlungsverfahren nach Anspruch 1, **dadurch gekennzeichnet, dass** beide Verfahrensschritte unter einem Druck ausgeführt werden, der im Wesentlichen gleich dem Luftdruck ist.

3. Oberflächenbehandlungsverfahren nach Anspruch 1 oder 2, **dadurch gekennzeichnet, dass** das erste Behandlungsgasgemisch Stickstoff umfasst.

4. Oberflächenbehandlungsverfahren nach einem der vorhergehenden Ansprüche, **dadurch gekennzeichnet, dass** der Kohlenwasserstoff durch mindestens eine funktionale Gruppe der Amin-, Amid-, Säure-, Ester-, Alkohol-, Imin-, Imid- oder Halidart substituiert wird oder durch mindestens ein Kopplungsmittel, insbesondere durch Silanolgruppen, oder eine Kombination daraus.

5. Oberflächenbehandlungsverfahren nach einem der vorhergehenden Ansprüche, **dadurch gekennzeichnet, dass** das aktive Gas ein Gas oder eine Flüssigkeit im Dampfzustand ist, für die der Dampfdruck bei einer Temperatur von 20 °C mehr als 10 Pascal beträgt.

6. Oberflächenbehandlungsverfahren nach einem der vorhergehenden Ansprüche, **dadurch gekennzeichnet, dass** das aktive Gas aus ungesättigten Kohlenwasserstoffen mit 2 oder 3 Kohlenstoffatomen ausgewählt wird.

7. Oberflächenbehandlungsverfahren nach einem der vorhergehenden Ansprüche, **dadurch gekennzeichnet, dass** das aktive Gas Acetylen oder Ethylen oder Propylen oder ein Gemisch aus diesen Gasen ist.

8. Oberflächenbehandlungsverfahren nach einem der vorhergehenden Ansprüche, **dadurch gekennzeichnet, dass** das zweite Behandlungsgemisch ein Gemisch ist, das Wasserstoff umfasst, und dessen Wasserstoffgehalt im Bereich von 10 bis 3000 ppm vol liegt, bevorzugter im Bereich von 100 bis 750 ppm vol.

9. Oberflächenbehandlungsverfahren nach einem der vorhergehenden Ansprüche, **dadurch gekennzeichnet, dass** die Konzentration des aktiven Gases im ersten Gemisch im Bereich von 25 bis 250 ppm vol liegt.

10. Oberflächenbehandlungsverfahren nach einem der vorhergehenden Ansprüche, **dadurch gekennzeichnet, dass** der erste Schritt in hoher Korona-Dosierung ausgeführt wird, d. h. diese im Bereich von 70 bis 150 Wmin/m² und vorzugsweise im Bereich von 70 bis 100 Wmin/m² liegt.

11. Oberflächenbehandlungsverfahren nach einem der vorhergehenden Ansprüche, **dadurch gekennzeichnet, dass** der zweite Schritt bei mittlerer bis hoher Korona-Dosierung ausgeführt wird, d. h. diese im Bereich von 40 bis 80 Wmin/m² und vorzugsweise im Bereich von 50 bis 70 Wmin/m² liegt.

## Revendications

1. Procédé de traitement de surface de substrats en polyoléfine, pendant lequel le substrat est soumis au moins aux deux étapes de processus suivantes :
- une décharge électrique à barrière diélectrique, dans un premier mélange gazeux de traitement contenant au moins un gaz actif choisi dans le groupe comprenant au moins un hydrocarbure monoinsaturé ou polyinsaturé linéaire ou ramifié ayant de préférence 2 à 10 atomes de carbone, plus préférablement 2 à 5 atomes de carbone, plus préférablement encore 2 ou 3 atomes de carbone, la concentration du gaz actif dans le premier mélange se situant dans une plage allant de 10 à 500 ppm en volume ;
- une décharge électrique à barrière diélectrique, dans un deuxième mélange gazeux de traitement qui est un mélange gazeux réducteur.

2. Procédé de traitement de surface selon la revendication 1, **caractérisé en ce que** les deux étapes de processus sont réalisées à une pression sensiblement égale à la pression atmosphérique.

3. Procédé de traitement de surface selon la revendication 1 ou 2, **caractérisé en ce que** ledit premier mélange gazeux de traitement comprend de l'azote.

4. Procédé de traitement de surface selon l'une quelconque des revendications précédentes, **caractérisé en ce que** ledit hydrocarbure est substitué par au moins un groupe fonctionnel du type amine, amide, acide, ester, alcool, imine, imide ou halogénure, ou par au moins un agent de couplage notamment par des groupes silanol, ou une combinaison de ceux-ci.

5. Procédé de traitement de surface selon l'une quelconque des revendications précédentes, **caractérisé en ce que** le gaz actif est un gaz ou un liquide à l'état de vapeur pour lequel la pression de la vapeur à une température de 20°C est supérieure à 10 pascals.

6. Procédé de traitement de surface selon l'une quelconque des revendications précédentes, **caractérisé en ce que** le gaz actif est choisi parmi les hydrocarbures insaturés ayant 2 ou 3 atomes de carbone.

7. Procédé de traitement de surface selon l'une quelconque des revendications précédentes, **caractérisé en ce que** le gaz actif est l'acétylène ou l'éthylène ou le propylène, ou un mélange de ces gaz.

8. Procédé de traitement de surface selon l'une quelconque des revendications précédentes, **caractérisé en ce que** le deuxième mélange de traitement est un mélange comprenant de l'hydrogène, dont la teneur en hydrogène se situe dans la plage de 10 à 3000 ppm en volume, et plus préférablement dans la plage de 100 à 750 ppm en volume.

9. Procédé de traitement de surface selon l'une quelconque des revendications précédentes, **caractérisé en ce que** la concentration du gaz actif dans le premier mélange se situe dans la plage de 25 à 250 ppm en volume.

10. Procédé de traitement de surface selon l'une quelconque des revendications précédentes, **caractérisé en ce que** ladite première étape est réalisée avec un traitement corona élevé, c'est-à-dire se situant dans la plage de 70 à 150 Wmin/m² et plus préférablement dans la plage de 70 à 100 Wmin/m².

11. Procédé de traitement de surface selon l'une quelconque des revendications précédentes, **caractérisé en ce que** ladite deuxième étape est réalisée avec un traitement corona moyen à élevé, c'est-à-dire se situant dans la plage de 40 à 80 Wmin/m² et de préférence dans la plage de 50 à 70 Wmin/m².
